# EUROPEAN PATENT SPECIFICATION

(11) **EP 1 925 071 B1**
(45) Date of publication and mention of the grant of the patent: **21.03.2012**
(21) Application number: 06735713.7
(22) Date of filing: 21.02.2006
(51) Int. Cl.: H02K 41/00, H02K 7/09

(54) **MAGNETICALLY LEVITATED TRANSPORT SYSTEM**
MAGNETISCH SCHWEBENDES TRANSPORTSYSTEM
SYSTÈME DE TRANSPORT EN LÉVITATION MAGNÉTIQUE

(30) Priority: 22.08.2005 US 209916
(43) Date of publication of application: 28.05.2008
(73) Proprietor: Bojiuc, Dumitru, Marina del Rey CA 90292 (US)
(72) Inventor: Bojiuc, Dumitru, Marina del Rey CA 90292 (US)
(74) Representative: Hocking, Adrian Niall
(86) International application number: PCT/US2006/006170
(87) International publication number: WO 2007/024260

(56) References cited:
- EP-A1- 0 224 617
- EP-A1- 0 456 239
- DE-A1- 10 213 408
- US-A- 3 225 228
- US-A- 3 225 228
- US-A- 5 473 993
- US-A- 5 473 993
- US-A- 5 605 100
- US-A- 5 605 100
- US-B1- 6 952 086

## Description

### Background

### Related Applications

This application claims international priority from a prior filed U.S. Utility Patent Application having serial no. 11209916 and entitled "Magnetically Levitated Transport System" filed on 8/22/05.

### Field of the Present Disclosure

This disclosure relates generally to electric motor-generators and more particularly to a DC linear electromagnetic machine operating by electrical induction.

### Description of Related Art

The following art defmes the present state of the field of the apparatus described and claimed herein:

Tu et al, US 2004/0135452, discloses a flat rotary electric generator that includes at least one toroidal coil structure for cutting magnetic lines to induce a current and at least one disc-shaped magnetic pole structure oriented parallel to the helical coil structure. If multiple toroidal coil structures and disc-shaped magnetic coil structures are included, the toroidal coil structures and disc-shaped magnetic coil structures are arranged in alternating manner. The toroidal coil structure and disc-shaped magnetic pole structure are not provided with a permeable material. When either the toroidal coil structures or the at least one disc-shaped magnetic pole structure is rotated by an external force, the toroidal coil structure cuts the magnetic lines passing therethrough to generate an induced current. Neal, US 2002/0135263, discloses a plurality of stator arc segments that form a toroidal core for a stator assembly used to make a motor. In a preferred embodiment, a plurality of magnetic fields is created when electrical current is conducted through wire wound around poles on the toroidal core. A monolithic body of phase change material substantially encapsulates the conductors and holds the stator arc segments in contact with each other in the toroidal core. Hard disc drives using the motor, and methods of constructing the motor and hard disc drives are also disclosed. Rose, US 6803691, discloses an electrical machine that comprises a magnetically permeable ring-shaped core centered on an axis of rotation and having two axially-opposite sides. Coils are wound toroidally about the core and disposed sequentially along the circumferential direction. Each coil includes two side legs extending radially alongside respectively sides of the core. Coil-free spaces exist between adjacent side legs. A bracket has first and second side flanges that are connected by a bridging structure and respectively abut the first and second sides of the coil. Mohler, US 6507257, discloses a bi-directional latching actuator that is comprised of an output shaft with one or more rotors fixedly mounted thereon. The shaft and rotor are mounted for rotation in a magnetically conductive housing having a cylindrical coil mounted therein and is closed by conductive end caps. The end caps have stator pole pieces mounted thereon. In one embodiment, the rotor has at least two oppositely magnetized permanent magnets which are asymmetrically mounted, i.e., they are adjacent at one side and separated by a nonmagnetic void on the other side. The stator pole piece has asymmetric flux conductivity and in one embodiment is axially thicker than the remaining portion of the pole piece. An abutment prevents the rotor from swinging to the neutral position (where the rotor magnets are axially aligned with the higher conductivity portion of the pole piece). Thus, the rotor is magnetically latched in one of two positions being drawn towards the neutral position. Energization of the coil with an opposite polarity current causes the rotor to rotate towards its opposite latching position whereupon it is magnetically latched in that position. Mohler, US 5337030, discloses a permanent magnet brushless torque actuator that is comprised of an electromagnetic core capable of generating an elongated toroidally shaped magnet flux field when energized. Outside the generally cylindrical coil is an outer housing with upper and lower end plates at each end. Mounted to the end plates and extending towards each other are stator pole pieces separated from its opposing pole piece by an air gap. A permanent magnet rotor is disposed in the air gap and mounted on a shaft which in turn is rotatably mounted in each of the end plates. The permanent magnet rotor comprises at least two permanent magnets, each covering an arcuate portion of the rotor and having opposite polarities. Energization of the coil with current in one direction magnetizes the pole pieces such that each of the two pole pieces attracts one of the magnets of the rotor and repels the other magnet of the rotor resulting in a torque generated by the output shaft. Reversal of the current flow results in a reversal of the torque and rotation of the rotor in the opposite direction. Preferred embodiments are disclosed having multiple cells, i.e. a plurality of stator rotor stator combinations and/or cells in which there are a plurality of pole pieces at each stator pole plane. Kloosterhouse et al, US 5191255, discloses an electromagnetic motor that includes a rotor having a plurality of magnets mounted along a perimeter of the rotor. Preferably, adjacent magnets have opposite poles facing outward. One or more electromagnets are disposed adjacent to the perimeter of the rotor so that as the rotor rotates, the magnets mounted on the rotor are carried near the poles of the electromagnets. Current is supplied to the electromagnets by a drive circuit in a predetermined phase relationship with the rotation of the rotor such that, for substantially all angular positions of the rotor, magnetic attraction and repulsion between the poles of the electromagnets and the magnets mounted on the rotor urge the rotor to rotate in a desired direction. Reflective material is mounted on the rotor in predetermined angular positions. The drive circuit includes a photosensitive device which produces a signal whose value varies according to whether the device is receiving light reflected from the reflective material. The signal is amplified to produce drive current for the electromagnets. Westley, 4623809, discloses a stepper motor housing a pole structure in which a pair of identical stator plates, each having a plurality of poles, are positioned back to back with the poles projecting in opposite directions, the stator plates being positioned between a pair of substantially identical stator cups, each stator cup having a plurality of poles projecting inwardly from a back wall with a peripheral side wall terminating in an outwardly extending flange. A major surface of each flange is in contact with a face on one of the stator plates so as to assure a low reluctance magnetic path. Fawzy, 4565938, discloses an electromechanical device which can be used as a motor or as a generator. The device has a housing, including bearing means to support a rotatable shaft. Disc magnet means are provided, and poled to have alternating polarity and are mounted on the shaft to define a rotor. The device includes at least one first pole shoe in contact with the magnet means, having a portion extending radially therefrom to define a virtual pole chamber, of a first polarity. Also included is at least one second pole shoe in contact with the magnet and having a portion extending radially therefrom to define a virtual pole chamber of the other polarity. A toroid stator is mounted on the housing and has windings thereon. The stator is positioned annularly around the disc magnets such that the virtual pole chambers of the first and second pole shoes surround portions of said windings with circumferentially alternating fields of alternating polarity. Means are provided for electrical contact with the stator to draw off current when the device is operated as a generator, or provide current to operate the device as a motor. Fawzy, 4459501, discloses an electromechanical device which can be used as a motor or as a generator that has a housing, including bearing means to support a rotatable shaft. A pair of disc magnets are poled to have opposite polarity on the two faces of each. The magnets are mounted face to face together on the shaft to define a rotor. The device includes at least one first pole shoe in contact with one face of each magnet, and having a portion extending radially therefrom to define, in its preferred form, a pair of virtual pole chambers, of the same polarity as said one face. Also included is at least one second pole shoe in contact with the other face of each magnet and having a portion extending radially therefrom to define in its preferred form a pair of virtual pole chambers of the same polarity as the other face. A toroidal stator is mounted on the housing and has windings thereon. The stator is positioned annularly around the disc magnets such that the virtual pole chambers of the first and second pole shoes surround portions of said windings with circumferentially alternating fields of alternating polarity. Means for electrical contact with the stator draw off current when the device is operated as a generator, or provide current to operate the device as a motor.

Our prior art search with abstracts described above teaches rotating electromagnet machines; in both motor and generator forms. Thus, the prior art shows in Neal, a toroidal core with radial arc segments, in Fawzy, we see a N-N and S-S pole face adjacency, in Tu et al, a N-S and S-N pole adjacency with radial coil windings, in Rose, we find radially wound coils in sequence around a toroidal core and with permanent magnet segments with N-N and S-S adjacency. However, the prior art fails to teach a linear electromagnetic machine that provides electromagnetic fields immersed in monopole permanent magnet fields of opposite polarities as is shown in the present apparatus and which provides operation by electrical induction. US5473993 suggests a levitatable vehicle utilising plural stator magnets around a core to create magnetic repulsion between the stator and a translator. However, improved repulsion and stability could be realised.

The present disclosure distinguishes over the prior art providing heretofore unknown advantages as described in the following summary.

### Summary

This disclosure teaches certain benefits in construction and use which give rise to the objectives described below.

The present invention is a magnetically levitated transport system showing a suspended vehicle for carrying passengers and freight fixedly mounted to a translating portion of the linear motor system of the present invention which has the functions of providing levitated positioning of the vehicle as well as propulsion and braking. The translating portion is movably engaged with a long linear ferromagnetic core which is fixed to railway supports mounted above a ground surface. Other ways of supporting and suspending the vehicle are clearly possible as well. Electromagnets are located at opposing sides of a fixed linear ferromagnetic core of a DC linear electric motor-generator. These electromagnets, in a typical application are interconnected initially in parallel electrical interconnection and are later switched to series electrical interconnection as will be described below. Certain benefits may be obtained by this ability to switch between parallel and series interconnection.

A primary objective inherent in the above described apparatus and method of use is to provide advantages not taught by the prior art.

Another objective is to provide an electromagnetic linear machine which develops a linear propulsive force and levitation using electromagnetic induction.

A further objective is to provide such a machine useful as a transport.

A further objective is to provide such a machine capable of recovering electrical energy upon braking.

A further objective is to provide such a machine capable of maintaining a desirable vehicle orientation about an axis in the direction of propulsion regardless of load imbalance or centripetal force vectors.

A further objective is to provide such a machine capable of developing propulsion and braking forces without direct physical contact for electrical current supply.

A further objective is to provide such a machine that is operated using energy supplied from an on-board power supply or an external power feed, or a combination of both.

Other features and advantages of the described apparatus and method of use will become apparent from the following more detailed description, taken in conjunction with the accompanying drawings, which illustrate, by way of example, the principles of the presently described apparatus and method of its use.

### Brief Description of the Drawings

The accompanying drawings illustrate at least one of the best mode embodiments of the present apparatus and method of it use. In such drawings:

Figure 1 is a vertical frontal cross-sectional schematic view of the present invention showing a transport system with a vehicle suspended from a support system and a means for propulsion shown above the vehicle;

Figure 2 is a table of symbols used in the further figures;

Figure 3 is a schematic diagram of a fixed, i.e., static portion of said propulsion system, an electromagnetic linear motor;

Figure 4 is a schematic diagram of a moving or translational portion of said electromagnetic linear motor showing the vehicle engaged therewith;

Figure 5 is a schematic diagram; enlarged from Fig. 1; showing the principals and operating mechanisms of the present invention and clearly showing the interrelationship between the static and moving portions of the linear motor as well as an auto-balancing mechanism for the vehicle.

### Detailed Description

The above described drawing figures illustrate the described apparatus and its method of use in at least one of its preferred, best mode embodiments, which is further defined in detail in the following description. Those having ordinary skill in the art may be able to make alterations and modifications to what is described herein without departing from its scope defined in the appended claims.

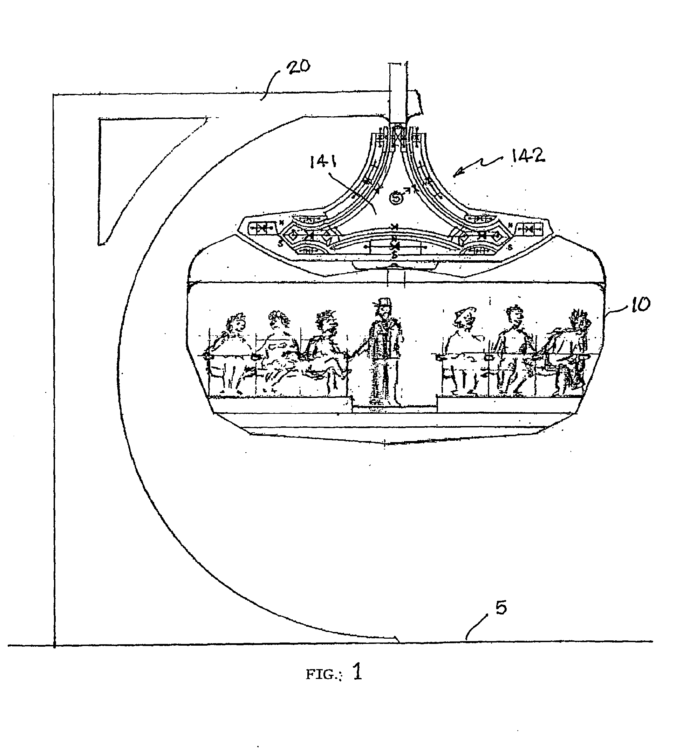

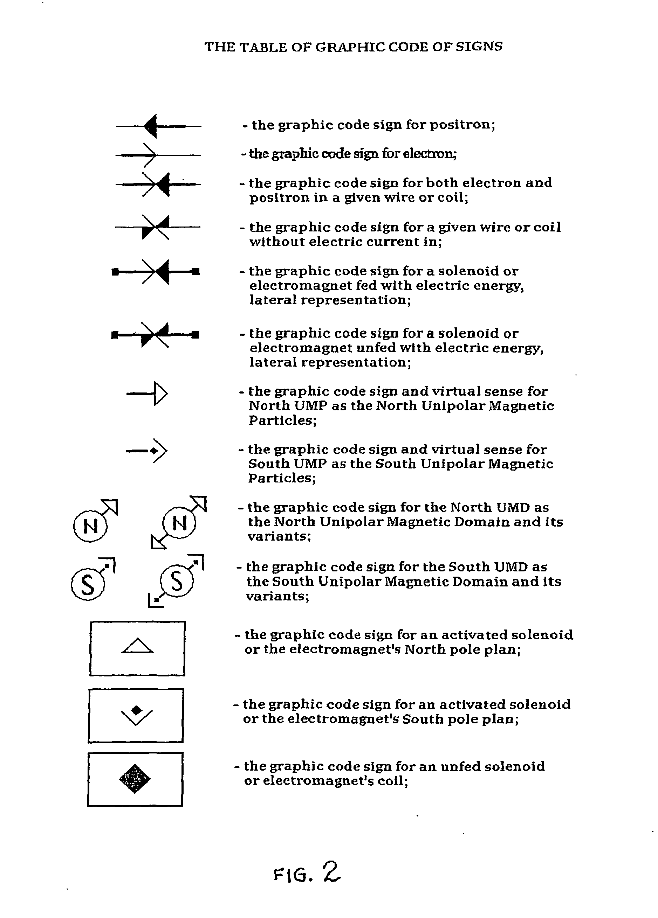

Figs. 1-5 are views of the presently described apparatus operating according to principals that represent an important application as an extension to the apparatus defined in U.S. application serial number 11200920 filed on 09 AUG 2005, and which embodies a common theoretical basis therewith.

Fig. 1 is a sectional view of a magnetically levitated transport system showing suspended vehicle **10** for carrying passengers and freight fixedly mounted to translator **142** of the present invention. Translator **142** is movably engaged with a stator **141** as will be described below and which is fixed to railway supports **20**, one of which being shown in Fig. 1 fixed to and extending upwardly from a ground surface **5**. Other ways of supporting and suspending the vehicle will be known to those of skill in the art and may be employed without deviating from the intensions of the invention and the achievement of its objectives.

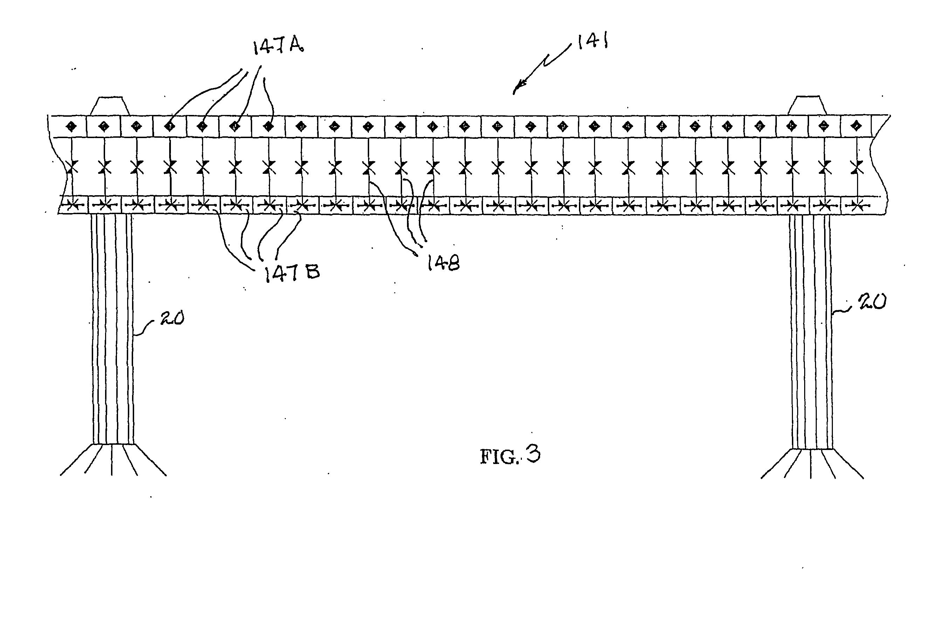

Fig. 3 is a schematic representation showing the instant invention railway system supported by railway supports **20** and represents the track upon which the railway vehicle **10** moves. The stator **141** is shown schematically. The present enablement is a DC linear electric motor-generator. As shown in Fig. 3 the stator comprises a linear series of electromagnets **147** interconnected by windings **148** where each is a cell of the track. In this diagram the electromagnets **147** are represented by rectangular boxes. Those along the top of the diagram are physically positioned at the vertical center of the track while those along the bottom of the diagram are located horizontally to the left and right of the center of the track. Until the vehicle 10 arrives at each cell, the electromagnets are not energized.

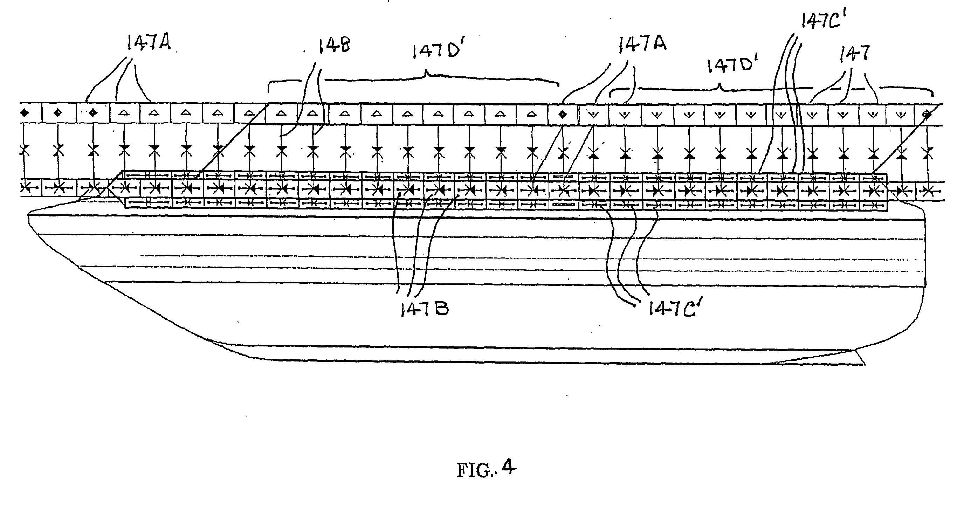

Fig. 4 schematically depicts the interaction between the translator **142** and the stator **141**. At the left of Fig. 4 we see the identical condition of the several electromagnets **147** as in Fig. 3. Now, the translator **142** carries a plurality of electromagnets **147** which interact with those of the stator **141** as will be described. As the vehicle approaches each cell of the stator, the cell is automatically switched to receive current to that each cell is energized. As the translator **142** passes the energized cells it is levitated. Inductive interaction between stator **141** and translator **142** produced electromotive force which drives the vehicle forward.

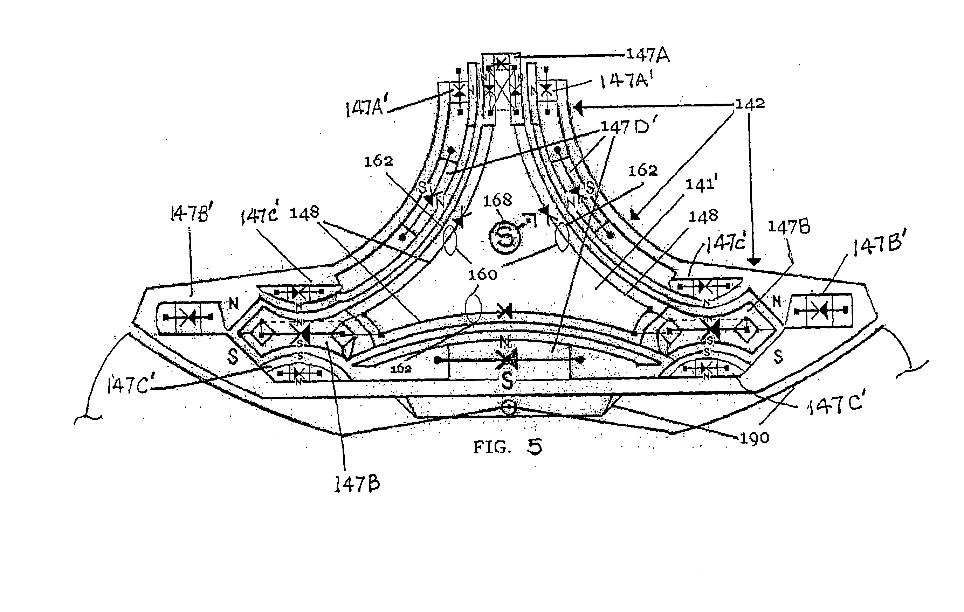

In Fig. 5, it is shown that the stator's electomagnets **147** are located laterally with respect to the axis of travel at both edges of a curved triangular shaped linear ferromagnetic core **141'** and also at its apex. These electromagnets **147** may be interconnected in series or parallel as will be determined by use objectives. The ferromagnet core **141'** has a continuous peripheral aperture **162**. Windings **148** are laid within this aperture **162**. Windings **148** form a continuous circuit around the ferromagnet core **141'** and the electromagnets **147**.

The linear ferromagnetic core's wiring system, as shown for each segment of this vertebral column is electrically interconnected in series and-or in parallel so that the coils end in a short cut interconnection and than a general protection switch where each of the coils has the same function, i.e., energy transfer, magnetic levitation, guidance and propulsion.

In Fig. 5 we find sets of electromagnets which have several functions. First, the electromagnets **147A** and coil **148** in stator **141** carries a switched-in pulsating direct current which energizes all of the electromagnets in the stator **141**. Second, a pulsed current is induced into electromagnets **147A'** by electromagnets **147A**. This induced current is received by all electrical devices on the translator **142** and in the vehicle **10**. Electromagnets **147B** interact with electromagnets **147B'** to provide lateral stability and centering of the translator **142** on stator **141**. Also, electromagnets **147B** interact with electromagnets **147C'** to maintain levitation and vertical stability of the translator **142** about stator **141**. Propulsive force is provided by large electromagnets **147D'** which react with coils **148** to provide inductive electromotive forces.

Electromagnets **147A'**, **147B'** and **147C'** have permanent magnet cores to provide levitation and stability in the absence of electrical current and in the absence of forward motion when no induction of current is available to the translator **142**.

Additionally, the mobile portion provides a load support & auto balance assembly **190** which sustains the load, i.e., passengers, freight and enables the vehicle **10** to tilt according to necessity of traversing curves.

## Claims

1. A magnetically levitated transport apparatus comprising: a vehicle (10) for carrying a payload; the vehicle (10) mounted to a translator (142) movably engaged with an elongate stator (141), the stator (141) being essentially triangular in cross-section and having an essentially three-sided outwardly facing stator surface, the stator (141) comprising windings (148) continuously covering each side of a curved triangular shaped linear ferromagnetic core (141') forming plural stator electromagnets (147); the translator (142) having a three-sided inwardly facing translator surface comprising plural translator electromagnets (147) proximal to the stator electromagnets (147); the stator (141) and translator electromagnets (147) energized by electrical currents such that magnetic repulsion between stator (141) and translator electromagnets (147) levitates, centres and provides propulsion to the translator (142) for linear movement along the stator (141), wherein the translator (142) is substantially surrounding the lateral cross-section of the stator (141).

2. A magnetically levitated transport apparatus of claim 1, wherein the stator electromagnets (147) comprise a centrally positioned electromagnet energized by direct current for translating and braking the translator (142), and at least one pair of laterally positioned electromagnets (147) energized by direct current for centring and levitating the translator (142) about the stator (141).

3. A magnetically levitated transport apparatus of claim 2, wherein the stator electromagnets (147) comprise a plurality of stator cells arranged in side-by-side positions along a direction of travel of the translator (142).

4. A magnetically levitated transport apparatus of claim 3, wherein each of the stator (141) cells is electrically and magnetically independent.

5. A magnetically levitated transport apparatus of claim 4, wherein each of the stator cells engage a proximity switch controlled by the presence of the translator (142) as it moves along the stator (141).

6. A magnetically levitated transport apparatus of claim 1, wherein the stator (141) and translator electromagnets (147) have permanent magnet cores (141') whereby levitation and stability of the apparatus is maintained in the absence of electrical current and in the absence of forwards motion when induction currents are not produced.

7. A magnetically levitated transport apparatus of claim 1, wherein the translator (142) includes a load support and auto-balance assembly (190) on its lower surface for suspending a vehicle (10) to enable titling through curves.

8. A magnetically levitated transport apparatus of claim 1, wherein a said electromagnet (147D') is provided at the base of the triangular cross-section stator and translator, opposite the respective apex.

## Patentansprüche

1. Eine magnetisch schwebende Transportvorrichtung, umfassend: ein Fahrzeug (10) zum Tragen einer Nutzlast; wobei das Fahrzeug (10) an einem Translator (142) befestigt ist, der mit einem länglichen Stator (141) beweglich verbunden ist, der Stator (141) im Wesentlichen einen dreieckigen Querschnitt hat und eine im Wesentlichen dreiseitige nach außen gerichtete Statorfläche aufweist, der Stator (141) Wicklungen (148) umfasst, die jede Seite eines gekrümmten dreieckförmigen linearen ferromagnetischen Kerns (141') unter Bildung von mehreren Stator-Elektromagneten (147) kontinuierlich bedecken; der Translator (142) eine dreiseitige nach innen gerichtete Translatorfläche aufweist, die mehrere Translator-Elektromagnete (147) proximal zu den Stator-Elektromagneten (147) umfasst; die Stator- (141) und Translator-Elektromagnete (147) derart mit elektrischen Strömen bestromt werden, dass die magnetische Abstoßung zwischen Stator- (141) und Translator-Elektromagneten (147) den Translator (142) zum Schweben bringt, zentriert und mit einem Vortrieb zur Linearbewegung entlang des Stators (141) versieht, wobei der Translator (142) im Wesentlichen den seitlichen Querschnitt des Stators (141) umgibt.

2. Eine magnetisch schwebende Transportvorrichtung nach Anspruch 1, wobei die Stator-Elektromagnete (147) einen zentral positionierten Elektromagneten, der mit Gleichstrom zum Verschieben und Bremsen des Translators (142) bestromt wird, und mindestens ein Paar von seitlich positionierten Elektromagneten (147) umfassen, das mit Gleichstrom zum Zentrieren und Schweben des Translators (142) um den Stator (141) herum bestromt wird.

3. Eine magnetisch schwebende Transportvorrichtung nach Anspruch 2, wobei die Stator-Elektromagnete (147) eine Vielzahl von Statorzellen umfassen, die in Positionen Seite an Seite entlang einer Bewegungsrichtung des Translators (142) angeordnet ist.

4. Eine magnetisch schwebende Transportvorrichtung nach Anspruch 3, wobei jede Statorzelle (141) elektrisch und magnetisch unabhängig ist.

5. Eine magnetisch schwebende Transportvorrichtung nach Anspruch 4, wobei jede Statorzelle einen Näherungsschalter einschaltet, der durch Gegenwart des Translators (142) gesteuert wird, während er sich entlang des Stators (141) bewegt.

6. Eine magnetisch schwebende Transportvorrichtung nach Anspruch 1, wobei die Stator- (141) und Translator-Elektromagnete (147) permanente Magnetkerne (141') aufweisen, wodurch das Schweben und die Stabilität der Vorrichtung bei Fehlen von elektrischem Strom und bei Fehlen von Vorwärtsbewegung aufrechterhalten werden, wenn keine Induktionsströme erzeugt werden.

7. Eine magnetisch schwebende Transportvorrichtung nach Anspruch 1, wobei der Translator (142) eine Lastträger- und Selbstausgleichvorrichtung (190) an seiner unteren Fläche zur Aufhängung eines Fahrzeugs (10) einschließt, damit eine Schiefstellung durch Kurven ermöglicht wird.

8. Eine magnetisch schwebende Transportvorrichtung nach Anspruch 1, wobei einer der Elektromagneten (147D') an der Basis des dreieckigen Querschnitts von Stator und Translator, gegenüber der jeweiligen Spitze bereitgestellt ist.

## Revendications

1. Appareil de transport à lévitation magnétique comprenant : un véhicule (10) destiné à transporter une charge utile ; le véhicule (10) étant monté sur un dispositif de translation (142) engagé de manière mobile avec un stator allongé (141), le stator (141) étant de section transversale essentiellement triangulaire et ayant une surface de stator essentiellement à trois côtés tournée vers l'extérieur, le stator (141) comprenant des enroulements (148) recouvrant de manière continue chaque côté d'un noyau ferromagnétique linéaire de forme triangulaire incurvée (141') formant plusieurs électroaimants de stator (147) ; le dispositif de translation (142) ayant une surface de dispositif de translation à trois côtés tournée vers l'intérieur comprenant plusieurs électroaimants de dispositif de translation (147) proximaux aux électroaimants de stator (147) ; les électroaimants de stator (141) et de dispositif de translation (147) étant excités par des courants électriques de telle sorte qu'une répulsion magnétique entre les électroaimants de stator (141) et de dispositif de translation (147) fait léviter, centre et fournit une propulsion au dispositif de translation (142) pour un déplacement linéaire le long du stator (141), le dispositif de translation (142) entourant sensiblement la section transversale latérale du stator (141).

2. Appareil de transport à lévitation magnétique selon la revendication 1, dans lequel les électroaimants de stator (147) comprennent un électroaimant positionné de manière centrale, excité par un courant direct pour déplacer en translation et freiner le dispositif de translation (142), et au moins une paire d'électroaimants (147) positionnés latéralement, excités par un courant direct pour centrer et faire léviter le dispositif de translation (142) autour du stator (141).

3. Appareil de transport à lévitation magnétique selon la revendication 2, dans lequel les électroaimants de stator (147) comprennent une pluralité de cellules de stator disposées dans des positions côte à côte le long d'une direction de déplacement du dispositif de translation (142).

4. Appareil de transport à lévitation magnétique selon la revendication 3, dans lequel chacune des cellules de stator (141) est électriquement et magnétiquement indépendante.

5. Appareil de transport à lévitation magnétique selon la revendication 4, dans lequel chacune des cellules de stator engage un commutateur de proximité commandé par la présence du dispositif de translation (142) au fur et à mesure que celui-ci se déplace le long du stator (141).

6. Appareil de transport à lévitation magnétique selon la revendication 1, dans lequel les électroaimants de stator (141) et de dispositif de translation (147) ont des noyaux d'aimant permanent (141') par lesquels la lévitation et la stabilité de l'appareil sont maintenues en l'absence de courant électrique et en l'absence d'un déplacement vers l'avant lorsque des courants d'induction ne sont pas produits.

7. Appareil de transport à lévitation magnétique selon la revendication 1, dans lequel le dispositif de translation (142) comprend sur sa surface inférieure un ensemble de support de charge et d'auto-équilibrage (190) pour la suspension d'un véhicule (10) pour permettre une inclinaison dans les courbes.

8. Appareil de transport à lévitation magnétique selon la revendication 1, dans lequel un électroaimant précité (147D') est disposé à la base des stator et dispositif de translation à section transversale triangulaire, à l'opposé du sommet respectif.
